# EUROPÄISCHE PATENTSCHRIFT

(11) **EP 1 458 454 B1**
(45) Veröffentlichungstag und Bekanntmachung des Hinweises auf die Patenterteilung: **01.08.2007**
(21) Anmeldenummer: 01991670.9
(22) Anmeldetag: 22.12.2001
(51) Int. Cl.: B01D 45/06, B01D 45/08, B01D 3/24

(54) **ALS TROPFENABSCHEIDER UND TRENNBODEN WIRKENDE EINHEIT**
UNIT ACTING AS DROP SEPARATOR AND PARTITION BASE
UNITE SERVANT DE PARE-GOUTTES ET DE BASE DE SEPARATION

(43) Veröffentlichungstag der Anmeldung: 22.09.2004
(73) Patentinhaber: Munters Euroform GmbH, 52072 Aachen (DE)
(72) Erfinder: WANDRES, Peter, 52066 Aachen (DE); KRAUSS, Roland, 41836 Hückelhoven (DE); WURZ, Dieter, 76532 Baden-Baden (DE)
(74) Vertreter: Hauck Patent- und Rechtsanwälte
(86) Internationale Anmeldenummer: PCT/DE2001/004896
(87) Internationale Veröffentlichungsnummer: WO 2003/055573

(56) Entgegenhaltungen:
- DE-A- 19 954 128
- US-A- 3 834 135
- US-A- 5 268 011
- DATABASE WPI Week 199225 Derwent Publications Ltd., London, GB; AN 1992 207357 XP002198900 & SU 1 666 166 A (SUMY COMPRESSORS RES INST), 30. Juli 1991 (1991-07-30)

## Beschreibung

Die Erfindung betrifft eine als Tropfenabscheider und Trennboden wirkende Einheit mit einer Vielzahl von nebeneinander angeordneten Lamellen, die zwischen sich Durchtrittskanäle für ein von unten nach oben strömendes, mit einer ersten Flüssigkeit beladenes Gas bilden und höhenversetzte Fangrillen zum Auffangen einer von oben nach unten strömenden zweiten Flüssigkeit aufweisen, wobei der untere Tropfenabscheiderteil und der obere Trennbodenteil einander überlappen.

Eine derartige Einheit ist in der DE 199 54 128 A1 beschrieben. Die bekannte Einheit kombiniert die Wirkung eines Tropfenabscheiders und eines Trennbodens. Die Aufgabe eines Tropfenabscheiders besteht darin, Tropfen abzuscheiden, die von einer Gasströmung mitgeführt werden. Für Tropfenabscheider ist charakteristisch, dass die Tropfenbeladung der Gasströmung in aller Regel gering ist. Demgegenüber erfüllen Trennböden die Aufgabe, Kolonnenabschnitte gegeneinander abzutrennen. So wird beispielsweise ein Trennboden von einem gasförmigen, von unten kommenden Fluid durchströmt, während eine Flüssigkeit von oben auf den Trennboden herabregnet, die nicht in den darunterliegenden Kolonnenabschnitt gelangen darf.

Klassische Trennböden bewirken eine relativ große Querschnittsversperrung bzw. hohe Übergeschwindigkeiten und demzufolge hohe Druckverluste. Ferner wird zusätzlich eine Tropfenabscheiderlage benötigt, sofern der aufsteigende Gasstrom mit Tropfen beladen ist, die nicht in den darüberliegenden Kolonnenabschnitt gelangen sollen. Die Einbauhöhe aus Tropfenabscheider und Trennboden ist dann kostentreibend groß. Demgegenüber wird in der vorstehend genannten Veröffentlichung eine raumsparende Kombination von Tropfenabscheider und Trennboden beschrieben, bei der besonders geringe Druckverluste auftreten.

Bei der bekannten Einheit ist der untere Abschnitt als herkömmlicher Lamellentropfenabscheider gestaltet. Die gekrümmten Wandabschnitte der Lamellen zwingen der Gasphasenströmung eine Umlenkung auf, der die Tropfen nicht bzw. nicht ausreichend folgen können, so dass sie auf den Wänden aufschlagen. Die von oben herabregnende Flüssigkeit wird in Auffangrinnen abgeschieden, die höhenversetzt angeordnet sind. Auf diese Weise wird eine das Durchregnen verhindernde Rinnenüberdeckung erreicht, ohne dass der Querschnitt nennenswert unter 50% des freien Querschnitts reduziert werden müsste. Somit werden bei geringen Einbauquerschnitten geringe Druckverluste erzielt, weil sich die Übergeschwindigkeiten in Grenzen halten.

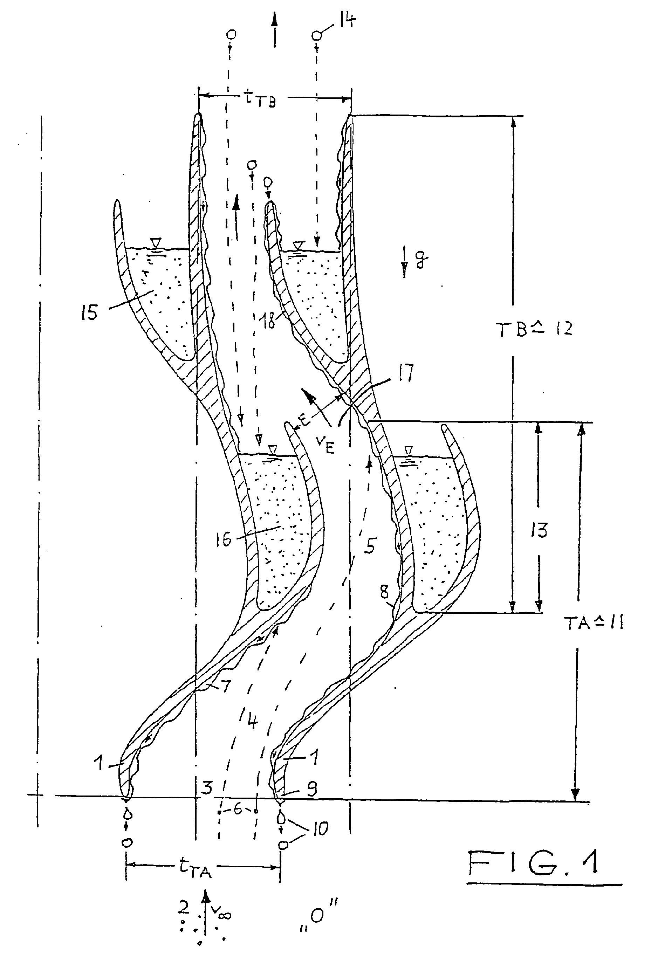

Ein Beispiel der in der genannten Veröffentlichung beschriebenen Einheit ist in Figur 1 dargestellt. Dargestellt ist nur ein Ausschnitt aus einem größeren Lamellenpaket, der aus zwei Lamellen 1 besteht. Das tropfenbeladene Gas 2 tritt gegen die Wirkung der Schwerkraft g mit v_{∞} aufsteigend bei 3 in den Tropfenabscheiderbereich ein, der aus zweidimensionalen und somit leicht extrudierbaren Lamellen gebildet wird. Die Gasströmung wird bei 4 erstmalig und dann nochmals bei 5 jeweils um ca. 45° umgelenkt. Nicht zu kleine Tropfen 6 werden aufgrund der Trägheitswirkung auf die Lamellen ausgetragen und fließen als Film 7 und 8 zur Vorderkante 9 der Lamellen 1 zurück, wo sich große Tropfen 10 ablösen, die gegen die Gasströmung v_{∞} in den vorgeschalteten Abschnitt O zurückfallen können.

Im wesentlichen ist oberhalb des Tropfenabscheiderbereiches 11 der Trennbodenbereich 12 angeordnet. Die beiden Bereiche weisen einen Überlappungsbereich 13 auf.

Im Trennbodenbereich werden die von oben herabregnenden Tropfen 14 aufgefangen. Hierfür sind wenigstens zwei große Fangrillen 15 und 16 links und rechts der Zentrallamelle 17 höhenversetzt angeordnet. Diese Fangrillen dienen gleichzeitig als Dränagekanäle für die Abführung der im Trennbodenabschnitt aufgefangenen Flüssigkeit. Hierfür können die Lamellen in bekannter Weise je nach anfallender Flüssigkeitsmenge unterschiedlich stark in Längsrichtung geneigt eingebaut werden.

Die bekannte Einheit aus Tropfenabscheider und Trennboden funktioniert einwandfrei. Bei einer in Längsrichtung geneigten Anordnung der Lamellen treten am unteren Lamellenende die erste Flüssigkeit aus den Durchtrittskanälen und die zweite Flüssigkeit in Fangrillen aus und vermischen sich miteinander. Dies ist unerwünscht, da es sich bei beiden Flüssigkeiten in der Regel um verschiedene Flüssigkeiten handelt, beispielsweise bei einem Einsatz in einem Gaswäscher um die im Gasstrom enthaltene Flüssigkeit (erste Flüssigkeit) und um Spülwasser (zweite Flüssigkeit). Desweiteren kann die herabregnende Flüssigkeit (zweite Flüssigkeit) in den aus baulichen Gründen zwischen dem oberen Ende des Lamellenpaketes und einer Endplatte vorhandenen Spalt eindringen, dort bis zum unteren Lamellenende gelangen und an der Unterseite der schräg eingebauten Lamellen entlangfließen, so dass sich auch diese Flüssigkeit am in Längsrichtung unteren Ende der Lamellen mit der anderen Flüssigkeit vermischt.

Der Erfindung liegt die Aufgabe zugrunde, die vorstehend beschriebene Einheit bzw. Kombination aus Tropfenabscheider und Trennboden derart weiterzuentwickeln, dass ein Vermischen der aus dem Gasstrom abgeschiedenen Flüssigkeit und der herabregnenden Flüssigkeit am in Längsrichtung unteren Ende der schräg eingebauten Lamellen vermieden wird.

Diese Aufgabe wird erfindungsgemäß bei einer als Tropfenabscheider und Trennboden wirkenden Einheit der angegebenen Art dadurch gelöst, dass sie eine sich bis mindestens zum unteren Ende des Überlappungsbereiches erstreckende Ablenkeinrichtung für die Durchtrittskanäle im in Längsrichtung unteren Endbereich der schräggestellten Lamellen zum Trennen der ersten und zweiten Flüssigkeit voneinander aufweist.

Mit der erfindungsgemäß vorgesehenen Ablenkeinrichtung wird verhindert, dass die im Tropfenabscheiderteil der Durchtrittskanäle befindliche, aus dem Gasstrom abgeschiedene und an den Lamellenwänden angesammelte erste Flüssigkeit, die entlang den Wänden der schräg eingebauten Lamellen zum Austrittsende der Lamellen schräg nach unten strömt, sich am Austrittsende der Lamellen mit der in den Fangrillen schräg abwärtsströmenden zweiten Flüssigkeit vermischt. Die erste Flüssigkeit gelangt nicht bis zum Austrittsende der Lamellen, sondern wird durch die in diesem Bereich vorgesehene Ablenkeinrichtung nach unten abgelenkt, so dass sich zwei getrennte Flüssigkeitsströme ergeben. Während die zweite Flüssigkeit normal das Austrittsende der Lamellen passiert, wird die erste Flüssigkeit durch die vorgesehene Ablenkeinrichtung daran gehindert, das Austrittsende zu erreichen, so dass eine Vermischung nicht mehr stattfinden kann.

Die Ablenkeinrichtung erstreckt sich mindestens bis zum unteren Ende des Überlappungsbereiches zwischen Tropfenabscheiderteil und Trennbodenteil und sperrt die Durchtrittskanäle bis mindestens zu dieser Höhe. Sie kann sich auch weiter nach oben erstrecken, d.h. teilweise in den Überlappungsbereich hinein oder sogar über den Überlappungsbereich hinaus. In diesen Fällen darf die Ablenkeinrichtung jedoch nur die Durchtrittskanäle sperren, während sie an den Fangrinnen entsprechende Ausnehmungen aufweisen muss, damit die in den Fangrinnen gesammelte und abgeführte zweite Flüssigkeit normal bis zum unteren Austrittsende der Lamellen gelangen kann. Bei diesen Ausführungsformen wird in jedem Falle verhindert, dass auch die an den Lamellenwänden im Übergangsbereich abgeschiedene erste Flüssigkeit bis zum Austrittsende der Lamellen gelangt, sondern vorher auf die Ablenkeinrichtung trifft und nach unten abgeführt wird.

Die Ablenkeinrichtung weist vorzugsweise eine quer zur Lamellenebene verlaufende Platte auf. Diese Platte bildet eine mechanische Ablenkeinrichtung für die erste Flüssigkeit im Bereich des Tropfenabscheiderteils der Durchtrittskanäle, und, wenn sie sich höher erstreckt, auch für die erste Flüssigkeit im Überlappungsbereich zwischen Tropfenabscheiderteil und Trennbodenteil.

In Weiterbildung der Erfindung weist die Ablenkeinrichtung eine quer zur Lamellenlängsrichtung verlaufende Fangrinne auf. Die Fangrinne dient zum Auffangen des abgelenkten Stromes der ersten Flüssigkeit und zum Ableiten derselben im von der zweiten Flüssigkeit getrennten Zustand. Sie findet vorzugsweise in Verbindung mit der vorstehend erwähnten Ablenkplatte Verwendung, wobei die Ablenkplatte zweckmäßigerweise eine Wand (die abstromseitige Wand) der Fangrinne bildet.

Besonders bevorzugt wird eine Ausführungsform der Erfindung, bei der sich die Ablenkeinrichtung (Ablenkplatte) bis zum unteren Rand des Überlappungsbereiches erstreckt und die Fangrinne eine Anströmung der Lamellen von unten über die Fangrinne eine Anströmung der Lamellen von unten über eine bestimmte Strecke verhindert. Bei dieser Ausführungsform besteht somit die Ablenkeinrichtung aus Ablenkplatte und Fangrinne. Durch die Ablenkplatte wird eine mechanische Ablenkung der im Tropfenabscheiderteil der Durchtrittskanäle der Lamellen abfließenden ersten Flüssigkeit erreicht. Da die Fangrinne eine Anströmung der Lamellen von unten über eine bestimmte Strecke verhindert, kann in diesem strömungsberuhigten Bereich die im darüberbefindlichen Überlappungsbereich angesammelte erste Flüssigkeit abwärts in den Tropfenabscheiderbereich und von dort in die Fangrinne hineinfließen.

Dieser Teil der Flüssigkeit wird somit nicht durch eine mechanische Ablenkung nach unten in die Fangrinne gezwungen, sondern fließt automatisch aufgrund der erreichten Strömungsberuhigung abwärts in die Fangrinne hinein. Um diesen Effekt zu erzielen, muss die Fangrinne in Längsrichtung der Lamellen eine bestimmte Abmessung aufweisen, die vorzugsweise mindestens 80 mm beträgt. Wird die Anströmung des mit der ersten Flüssigkeit beladenen Gases von unten in diesem Bereich verhindert, läßt sich der vorstehend beschriebene Ablenkeffekt durch Strömungsberuhigung erreichen.

Die erfindungsgemäße Ablenkeinrichtung kann somit eine mechanische Ablenkung bewirken (durch die vorgesehene Ablenkplatte) oder eine Ablenkung durch Strömungsberuhigung (eine Anströmung von unten verhindernde Fangrinne) erzielen. Besonders bevorzugt wird die kombinierte Wirkung beider Effekte, wobei vorzugsweise die im Tropfenabscheiderteil vorhandene erste Flüssigkeit mechanisch abgelenkt wird, während die im Übergangsbereich vorhandene erste Flüssigkeit durch Strömungsberuhigung abgelenkt wird.

In Weiterbildung der Erfindung weist die Einheit eine weitere Ablenkeinrichtung für die zweite Flüssigkeit auf, die verhindert, dass die zweite Flüssigkeit in den Spalt zwischen einer Endplatte am in Längsrichtung oberen Lamellenende und dem Lamellenpaket eindringt. Diese weitere Ablenkeinrichtung ist vorzugsweise als schräg nach unten zum in Längsrichtung unteren Lamellenende gerichtete Platte ausgebildet.

Normalerweise ist aus baulichen Gründen zwischen einer am in Längsrichtung oberen Ende der Lamellen vorgesehenen Endplatte und den Lamellen selbst ein Spalt vorhanden, in den die auf das Lamellenpaket herabregnende zweite Flüssigkeit eindringt und am unteren Lamellenrand schräg abwärts fließt und zum Austrittsende der Lamellen gelangt und sich dort mit der ersten Flüssigkeit vermischt. Die vorgesehene weitere Ablenkeinrichtung verhindert ein derartiges Eindringen. Vielmehr wird die zweite Flüssigkeit so abgelenkt, dass sie in die vorgesehenen Fangrillen gelangt und von dort zum Austrittsende der Lamellen schräg abwärtsfließen kann.

Die Erfindung wird nachfolgend anhand von Ausführungsbeispielen in Verbindung mit der Zeichnung im einzelnen erläutert.

Es zeigen:
- Figur 1: einen Vertikalschnitt durch eine Kombination aus Tropfenabscheider und Trennboden, wobei nur ein Ausschnitt aus einem größerer Lamellenpaket dargestellt ist, der aus zwei Lamellen mit einem dazwischen angeordneten Durchtrittskanal besteht, gemäß DE 199 54 128 A1;
- Figur 2: einen Ausschnitt der Figur 1 im verkleinerten Maßstab, wobei eine erfindungsgemäß vorgesehene Ablenkeinrichtung schematisch dargestellt ist;
- Figur 3: einen Längsschnitt durch das Lamellenpaket der Figur 2 mit vorgesehener Abklenkeinrichtung;
- Figur 4: einen Ausschnitt entsprechend Figur 2 mit einer anderen Ausführungsform einer Ablenkeinrichtung; und
- Figur 5: einen Längsschnitt entsprechend Figur 3 mit der anderen Ablenkeinrichtung.

Die in Figur 1 gezeigte bekannte Ausführungsform einer Kombination aus Tropfenabscheider und Trennboden wurde bereits vorstehend erläutert. Im unteren Abschnitt ist ein Tropfenabscheiderteil 11 vorgesehen, während im oberen Abschnitt ein Trennbodenteil 12 vorgesehen ist. Der Überlappungsbereich beider Teile ist mit 13 bezeichnet.

Jede Lamelle 1 weist zwei Fangrillen 15, 16, auf die an der Außenseite und der Innenseite der Lamelle höhenversetzt angeordnet sind. Der zwischen den Lamellen 1 angeordnete Durchtrittskanal ist mit 17 bezeichnet. Er hat eine Engstelle E, die durch eine Auswölbung so weit verengt sein kann, dass der im Abschnitt 18 abfließende Film aus Tropfen, die im Trennbodenbereich 12 abgeschieden werden sollen, nicht in den darunterliegenden Tropfenabscheiderbereich 11 abfließen kann.

Die Breite des Durchtrittskanals 17 am unteren Ende ist mit t_{TA} bezeichnet, während die Breite am oberen Ende mit t_{TB} bezeichnet ist. Die Gasgeschwindigkeit im Bereich der Engstelle E ist mit v_{E} angegeben.

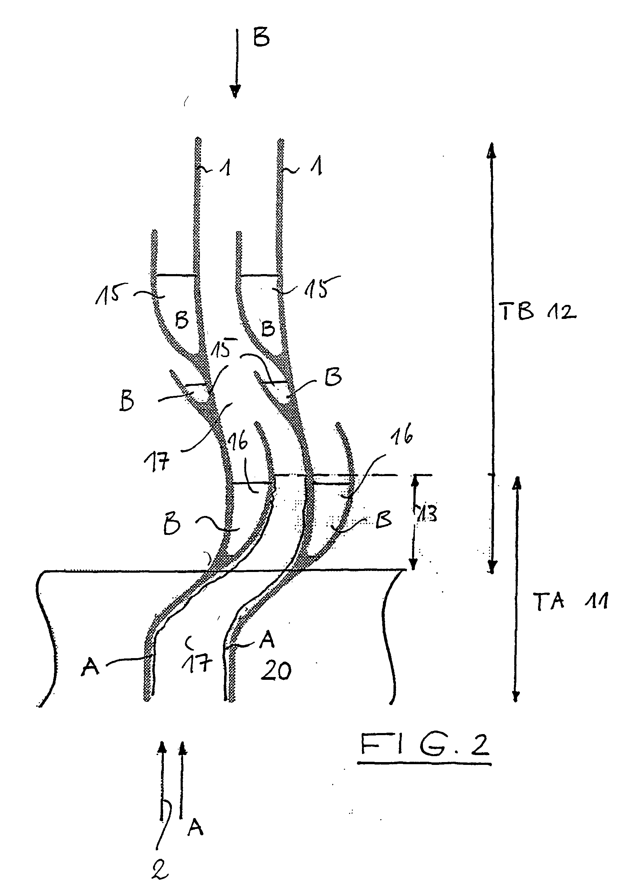

Figur 2 zeigt den Ausschnitt der Figur 1 in verkleinertem Maßstab, wobei die Lamellen 1 in einem etwas abgewandelten Zustand dargestellt sind und zwei zusätzliche Fangrinnen 15 aufweisen. Der untere Tropfenabscheiderteil TA ist wieder mit 11 bezeichnet, während der obere Trennbodenteil TB mit 12 gekennzeichnet ist. Der Überlappungsbereich ist bei 13 angedeutet. Das tropfenbeladene Gas 2 enthält eine erste Flüssigkeit, die mit A bezeichnet ist. Die von oben auf die Lamellen herabregnende zweite Flüssigkeit ist mit B bezeichnet. Man erkennt, dass die Flüssigkeit B von den Fangrinnen 15 und 16 aufgefangen wird. Die Flüssigkeit A wird im Tropfenabscheiderteil 11 abgeschieden und fließt als Film zur Unterseite der Lamellen 1 zurück.

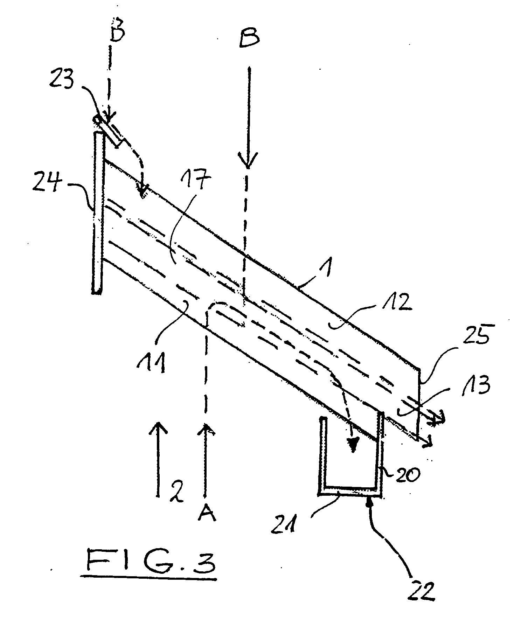

Bis zum Beginn des Überlappungsbereiches 13, d.h. bis zum unteren Ende der unteren Fangrinnen 16, erstreckt sich eine mit 20 bezeichnete Ablenkplatte, die quer zur Längsrichtung der Lamellen 1 verläuft. Diese Ablenkplatte 20 sperrt den Durchtrittskanal 17 bis zum unteren Ende des Überlappungsbereiches 13 und verhindert, dass die Flüssigkeit A das in Figur 3 bei 25 gezeigte Austrittsende des Lamellenpaketes erreicht. Figur 3 zeigt einen Längsschnitt durch das Lamellenpaket, wobei deutlich zu erkennen ist, dass die Lamellen 1 schräg angeordnet sind. Die Flüssigkeit B dringt von oben in die Durchtrittskanäle 17 zwischen den Lamellen ein, während der mit der Flüssigkeit A beladene Gasstrom 2 von unten in die Durchtrittskanäle 17 zwischen den Lamellen 1 eindringt. Am in Figur 3 linken oberen Ende der Lamellen 1 befindet sich eine Endplatte 24, an der die Lamellen fixiert sind, wobei jedoch ein Spalt zwischen Endplatte 24 und Lamellen 1 (nicht gezeigt) verbleibt. Dieser Spalt ist durch eine Ablenkeinrichtung 23 in Form einer schräg angeordneten Platte abgedeckt, so dass die herabregnende Flüssigkeit B auf die Schrägplatte trifft und in Figur 3 nach rechts in die Durchtrittskanäle 16 abgelenkt wird. Auf diese Weise kann die Flüssigkeit B nicht in den Spalt eindringen.

Die Flüssigkeit B wird in den Fangrinnen 15, 16 aufgefangen und fließt in diesen Fangrinnen dem Austrittsende 25 der Durchtrittskanäle bzw. Lamellen zu. Von unten wird das Lamellenpaket durch das mit der Flüssigkeit A beladene Gas 2 angeströmt. Im Tropfenabscheiderteil 11 der Durchtrittskanäle wird die Flüssigkeit A abgeschieden und fließt als die Kanalwände bedeckender Film ebenfalls dem Austrittsende 25 des Lamellenpaketes zu. Stromauf des Austrittsendes 25 ist die bereits in Figur 2 dargestellte Ablenkplatte 20 angeordnet, die die Durchtrittskanäle 17 teilweise sperrt, und zwar bis zu einer Höhe, auf der der Überlappungsbereich 13 zwischen Tropfenabscheiderteil 11 und Trennbodenteil 12 beginnt. Die im Tropfenabscheiderteil 11 abgeschiedene Flüssigkeit A kann daher nicht bis zum Austrittsende 25 gelangen, sondern trifft vorher auf die Ablenkplatte 20 und wird von dieser in eine quer zur Ebene der Lamellen verlaufende Fangrinne 21 geleitet. Die als Ablenkplatte 20 und Fangrinne 21 bestehende Ablenkeinrichtung ist insgesamt mit 22 bezeichnet.

Die Ablenkrichtung 22 erstreckt sich über eine gewisse Strecke in Längsrichtung der Lamellen und schirmt somit diesen Bereich der Durchtrittskanäle 17 gegenüber der flüssigkeitsbeladenen Gasströmung 2 ab. Hierdurch wird im Bereich der Ablenkeinrichtung eine strömungsberuhigte Zone in den Durchtrittskanälen 17 gebildet, die bewirkt, dass auch die im Übergangsbereich 13 abgeschiedene Flüssigkeit A in den Durchtrittskanälen nach unten strömen und in die Fangrinne 21 hineingelangen kann. Auf diese Weise wird eine Trennung der Flüssigkeiten A und B erreicht, wobei die Flüssigkeit B das Austrittsende 25 der Lamellen bzw. Kanäle passiert, während die Flüssigkeit A in der Fangrinne 21 aufgefangen wird. Die Ablenkeinrichtung 22 erstreckt sich soweit in Längsrichtung der Lamellen, dass sich die vorstehend erwähnte strömungsberuhigte Zone ausbilden kann. Die entsprechende Abmessung in Längsrichtung der Lamellen beträgt mindestens 80 mm.

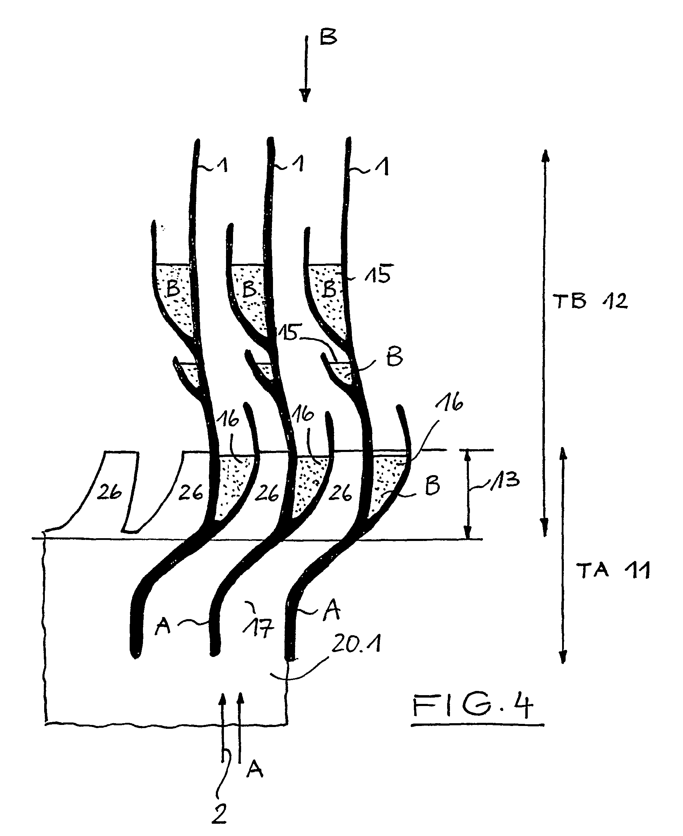

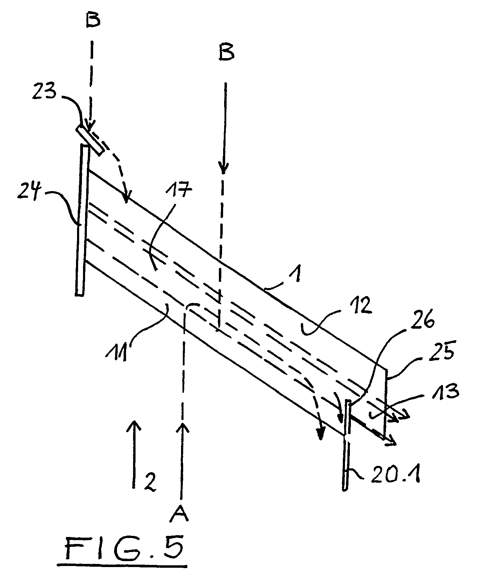

Figur 4 und 5 zeigen eine Ausführungsform, bei der die Ablenkplatte 20.1 mit fingerförmigen Extensionen 26 ausgestattet ist, die sich in den Durchtrittskanal 17 für die Gasströmung und somit in den Überlappungsbereich 13 hinein erstrecken. Diese Finger 26 verhindern ebenfalls eine Vermischung der im Überlappungsbereich 13 abgeschiedenen Flüssigkeit A mit der Flüssigkeit B, da sie den Durchtritt zur Entwässerungsseite 25 für die Flüssigkeit B versperren. Bei guter Passform der Ablenkeinrichtung 22 mit den Extensionen 26 ist eine zusätzliche Abdichtung der Ablenkeinrichtung zu den Lamellen 1 hin nicht erforderlich.

## Patentansprüche

1. Als Tropfenabscheider und Trennboden wirkende Einheit mit einer Vielzahl von nebeneinander angeordneten Lamellen 1, die zwischen sich Durchtrittskanäle 17 für ein von unten nach oben strömendes, mit einer ersten Flüssigkeit beladenes Gas 2 bilden und höhen-versetzte Fangrillen 15,16 zum Auffangen einer von oben nach unten strömenden zweiten Flüssigkeit aufwei-sen, wobei der untere Tropfenabscheiderteil 11 und der obere Trennbodenteil 12 einander überlappen, **dadurch gekennzeichnet, dass** sie eine sich bis mindestens zum unteren Ende des Überlappungsbereiches (13) erstreckende Ablenkeinrichtung (22) für die Durchtrittskanäle (17) im in Längsrichtung unteren Endbereich der schräggestellen Lamellen (1) zum Trennen der ersten und zweiten Flüssigkeit (A, B) voneinander aufweist.

2. Einheit nach Anspruch 1, **dadurch gekennzeichnet, dass** sich die Ablenkeinrichtung (22) im Bereich der Durchtrittskanäle (17) zumindest teilweise über den Überlappungsbereich (13) erstreckt.

3. Einheit nach Anspruch 1 oder 2, **dadurch gekennzeichnet, dass** die Ablenkeinrichtung (22) eine quer zur Lamellenebene verlaufende Ablenkplatte (20) besitzt.

4. Einheit nach einem der vorangehenden Ansprüche, **dadurch gekennzeichnet, dass** die Ablenkeinrichtung (22) eine quer zur Lamellenebene verlaufende Fangrinne (21) aufweist.

5. Einheit nach Anspruch 4, **dadurch gekennzeichnet, dass** sich die Ablenkeinrichtung (22) bis zum unteren Rand des Überlappungsbereiches (13) erstreckt und die Fangrinne (21) eine Anströmung der Lamellen (1) von unten über eine bestimmte Strecke verhindert.

6. Einheit nach Anspruch 4 oder 5, **dadurch gekennzeichnet, dass** die Abmessung der Fangrinne (21) in Lamellenlängsrichtung mindestens 80 mm beträgt.

7. Einheit nach einem der vorangehenden Ansprüche, **dadurch gekennzeichnet, dass** sie eine weitere Ablenkeinrichtung für die zweite Flüssigkeit (B) aufweist, die verhindert, dass die zweite Flüssigkeit (B) in den Spalt zwischen einer Endplatte (24) am in Längsrichtung oberen Lamellenende und dem Lamellenpaket eindringt.

8. Einheit nach Anspruch 7, **dadurch gekennzeichnet, dass** die weitere Ablenkeinrichtung als schräg nach unten zum in Längsrichtung unteren Lamellenende gerichtete Platte (23) ausgebildet ist.

9. Einheit nach einem der Ansprüche 1 bis 3, **dadurch gekennzeichnet, dass** die Ablenkeinrichtung als Ablenkplatte (20.1) mit fingerförmigen Verlängerungen (26) ausgebildet ist, die sich in die Durchtrittskanäle (17) erstrecken.

## Claims

1. A unit acting as droplet separator and partition base and comprising a plurality of juxtaposed lamellas (1) forming between them flow-through passages (17) for a gas (2) flowing from below to above and provided with a first liquid, and height-offset capturing grooves (15, 16) for capturing a second liquid flowing from above to below wherein the lower droplet separator part (11) and the upper partition base part (12) overlap with one another, **characterized in that** it includes a deflecting device (22) for the flow-through passages (17) in the longitudinally lower end portion of the inclined lamellas (1) for separating the first and second liquid (A, B) from one another, said deflecting device (22) extending at least to the lower end of the overlapping portion (13).

2. The unit according to claim 1, **characterized in that** the deflecting device (22) extends at least partly over the overlapping portion (13) in the region of the flow-through passages (17).

3. The unit according to claim 1 or 2, **characterized in that** the deflecting device (22) has a deflecting plate (20) extending transversely with respect to the plane of the lamellas.

4. The unit according to one of the preceding claims, **characterized in that** the deflecting device (22) has a capturing groove (21) extending transversely with respect to the plane of the lamellas.

5. The unit according to claim 4, **characterized in that** the deflecting device (22) extends to the lower edge of the overlapping portion (13) and the capturing groove (21) prevents a flow against the lamellas (1) from below over a certain distance.

6. The unit according to claim 4 or 5, **characterized in that** the dimension of the capturing groove (21) in longitudinal direction of the lamellas is at least 80 mm.

7. The unit according to one of the preceding claims, **characterized in that** it includes another deflecting device for the second liquid (B) which prevents that the second liquid (B) enters into the gap between an end plate (24) at the upper lamella end in longitudinal direction and the package of the lamellas.

8. The unit according to claim 7, **characterized in that** the other deflecting device is formed as plate (23) directed in a downwardly inclined manner to the lower lamella end in longitudinal direction.

9. The unit according to one of the claims 1 to 3, **characterized in that** the deflecting device is formed as deflecting plate (20) with finger-like extensions (26) which extend into the flow-through passages (17).

## Revendications

1. Unité servant de pare-gouttes et de base de séparation comportant une pluralité de lamelles (1) disposées les unes à côté des autres qui forment entre elles des canaux d'écoulement (17) destinés à un gaz (2) chargé d'un premier liquide s'écoulant du bas vers le haut et présentent des rainures de réception (15, 16) décalées en hauteur, destinées à recueillir un deuxième liquide s'écoulant du haut vers le bas, dans laquelle la partie pare-gouttes inférieure (11) et la partie base de séparation supérieure (12) se chevauchent, **caractérisée en ce qu'**elle présente un dispositif de déviation (22) s'étendant au moins jusqu'à l'extrémité inférieure de la zone de chevauchement (13), destiné aux canaux d'écoulement (17) dans la zone terminale longitudinalement inférieure des lamelles (1) placées en oblique pour séparer le premier et le deuxième liquide (A, B) l'un de l'autre.

2. Unité selon la revendication 1, **caractérisée en ce que** le dispositif de déviation (22) s'étend au moins en partie sur la zone de chevauchement (13) dans la zone de canaux d'écoulement (17).

3. Unité selon la revendication 1 ou 2, **caractérisée en ce que** le dispositif de déviation (22) a une plaque de déviation (20) courant transversalement par rapport au plan des lamelles.

4. Unité selon l'une quelconque des revendications précédentes, **caractérisée en ce que** le dispositif de déviation (22) présente une rigole de collecte (21) courant transversalement par rapport au plan des lamelles.

5. Unité selon la revendication 4, **caractérisée en ce que** le dispositif de déviation (22) s'étend jusqu'au bord inférieur de la zone de chevauchement (13) et la rigole de collecte (21) empêche sur une certaine distance un afflux de liquide par le bas sur les lamelles (1).

6. Unité selon la revendication 4 ou 5, **caractérisée en ce que** la dimension de la rigole de collecte (21) dans le sens longitudinal des lamelles est au moins de 80 mm.

7. Unité selon l'une quelconque des revendications précédentes, **caractérisée en ce qu'**elle présente un dispositif de déviation supplémentaire pour le deuxième liquide (B) qui empêche que le deuxième liquide (B) pénètre dans la fente entre une plaque terminale (24) à l'extrémité longitudinalement supérieure des lamelles et le paquet de lamelles.

8. Unité selon la revendication 7, **caractérisée en ce que** le dispositif de déviation supplémentaire est configuré comme une plaque (23) orientée en oblique vers le bas par rapport à l'extrémité longitudinalement inférieure des lamelles.

9. Unité selon l'une quelconque des revendications 1 à 3, **caractérisée en ce que** le dispositif de déviation est configuré comme une plaque de déviation (20.1) avec des prolongements en forme de doigt (26) qui s'étendent dans les canaux d'écoulement (17).
